# EUROPEAN PATENT APPLICATION

(11) **EP 4 541 631 A1**
(43) Date of publication of application: **23.04.2025**
(21) Application number: 22948066.0
(22) Date of filing: 20.06.2022
(51) Int. Cl.: B60K 35/00, B60W 60/00, B60W 50/14, B60W 50/00

(54) **VEHICLE DISPLAY DEVICE, VEHICLE COMPRISING SAME, AND OPERATING METHOD THEREOF**

(71) Applicant: LG Electronics Inc., Yeongdeungpo-gu Seoul 07336 (KR)
(72) Inventor: YU, Hyejin, Seoul 06772 (KR); EUN, Soyun, Seoul 06772 (KR); LEE, Jaeyoung, Seoul 06772 (KR); SON, Junghoon, Seoul 06772 (KR); WOO, Seungyeub, Seoul 06772 (KR)
(74) Representative: Vossius & Partner Patentanwälte Rechtsanwälte mbB
(86) International application number: PCT/KR2022/008692
(87) International publication number: WO 2023/249132

(57) **Abstract**

Disclosed are a vehicle display device, a vehicle comprising same, and an operating method thereof. The vehicle display device according to the present invention is mounted for a front seat in a vehicle and configured in a large screen, provides a plurality of objects related to execution of applications together with a screen including driving information of the vehicle, and is implemented to simultaneously display execution screens of a plurality of selected applications together with the driving information of the vehicle.

## Description

### Technical Field

One or more embodiments relate to a vehicle display device, a vehicle including the same, and an operating method thereof, and more particularly, to a vehicle display device mounted on a front seat of a vehicle to display various information related to driving of the vehicle on a large screen, a vehicle including the same, and an operating method thereof.

### Background Art

For safety and convenience of a user who uses a vehicle, various sensors and devices are provided in the vehicle, and functions of the vehicle are diversified. The functions of the vehicle may include a convenience function for promoting driver's convenience, and a safety function for enhancing safety of the driver and/or pedestrians.

Meanwhile, a display is installed on a front seat in a vehicle to display various driving-related information and entertainment-related control menus. For example, a navigation screen for guiding a path (or route) to a destination or a menu for controlling sound output in the vehicle may be output on the display.

Recently, in line with the trend that vehicles are perceived as moving spaces rather than simple means of transportation, drivers and occupants (hereinafter, referred to as 'occupant and the like') stay in the vehicles for a longer time.

Accordingly, the occupant and the like have a need to receive more diverse entertainment through in-vehicle displays. For example, the frequency of listening to music or watching movies in vehicles has increased, and accordingly, the demand for larger in-vehicle displays has also increased.

In case where an in-vehicle display is configured with such a large screen, a user interface (UI) is required to improve usability by taking into account both a driver's seat and occupants' seats.

Meanwhile, unlike terminal devices such as cellular phones, in-vehicle displays must take into account the element of driving, so the in-vehicle displays must be able to provide entertainment with priority given to safe driving and guidance to a destination.

### Disclosure of Invention

### Technical Problem

The present disclosure is directed to solving the aforementioned problems and other drawbacks.

One or more embodiments provide a vehicle display device capable of simultaneously displaying execution screens of a plurality of applications while enabling access to a wider range of entertainment by configuring an in-vehicle display with a larger screen, a vehicle including the vehicle display device, and an operating method thereof.

One or more embodiments provide a vehicle display device capable of quickly accessing other entertainment or preset menus and directly checking a navigation screen at any screen stage while simultaneously displaying execution screens of a plurality of applications, a vehicle including the vehicle display device, and an operating method thereof.

One or more embodiments provide a vehicle display device capable of adaptively varying accessible entertainment or menus according to a driving-related status of a vehicle, a vehicle including the vehicle display device, and an operating method thereof.

### Solution to Problem

According to one or more embodiments, a vehicle display device may be mounted on a front seat in a vehicle to be configured with a large screen, provide a plurality of objects associated with an execution of applications together with a screen including driving information related to the vehicle, and display execution screens of a plurality of selected applications together with the driving information related to the vehicle.

In some embodiments, a vehicle display device may include: a body mounted on a vehicle; a memory configured to store navigation information related to the vehicle; a display configured to display a first screen including driving information related to the vehicle and display a card view area on the first screen, the card view area including a plurality of objects associated with an execution of a plurality of applications; and a processor configured to display an execution screen of a first application corresponding to a first object, which is included in the card view area, on a first portion of the card view area, in response to receiving a selection input applied to the first object. The processor may control the display to output an execution screen of a second application corresponding to a second object, which is included in the card view area, on a second portion adjacent to the first portion of the card view area, in response to receiving a selection input applied to the second object. The first and second portions may be sub-areas having expanded sizes than corresponding objects, and remaining objects of the card view area may be restricted from being displayed while the sub-areas are displayed.

In an embodiment, the first screen may be a panoramic image including the navigation information, and the card view area may be displayed to be overlaid on an area designated on the panorama image.

In an embodiment, the first portion may be an area expanded based on a display position of the first object inside the card view area.

In an embodiment, the second portion may be an area expanded based on a display position of the second object with respect to the execution screen of the first application, and the position of the first part may change in response to a generation of the second portion.

In an embodiment, the processor may control the display such that the third object obscured by the first portion is displayed, in response to receiving an input to the card view area for an object search, while the execution screen of the first application is displayed on the first portion, and is hidden again by the first portion after completion of the object search.

In an embodiment, the processor may control the display such that a size of the first portion is reduced by an original size of the first object with maintaining the execution of the first application while receiving the input for the object search, and the first portion returns to a size before the object search when the object search is terminated.

In an embodiment, the processor may expand a sub-area corresponding to a selected portion to the entire card view area, and terminate an execution of an application corresponding to another portion which is not selected, in response to receiving a selection input to one of the first portion or the second portion.

In an embodiment, the processor may display a second screen, instead of the card view area, on the display, the second screen including the navigation information, in response to receiving a first input to the display while the first screen is displayed.

In an embodiment, the processor may control the display such that the card view area is reconfigured with objects corresponding to favorite applications, in response to receiving a second input to the display while the first screen is displayed.

In an embodiment, the processor may control the display such that a type of object included in the card view area changes based on at least one of a driving status or driving mode of the vehicle.

In an embodiment, the processor, in a stopped state of the vehicle, may reconfigure the card view area by further including an object associated with an execution of at least one application, which is restricted while the vehicle travels.

In an embodiment, the processor may recognize the driving mode of the vehicle, configure the card view area by excluding at least one object, which is restricted while the vehicle travels, and display the configured card view area, in a manual driving mode, and configure the card view area by including a same object as that while the vehicle is stopped and display the configured card view area, in an autonomous driving mode.

In an embodiment, the processor may control the display such that the first screen is maintained and simultaneously the card view area is drawn out along an input to be displayed, in response to receiving the input to a first area of the display while only the first screen is displayed on the display.

In an embodiment, at least one of the first object or the second object included in the card view area may include icons of a plurality of applications, and the selection input may be applied to an icon of a specific application included in the first object or the second object.

In an embodiment, the processor, in case where a specific object in the card view area is associated with the driving information, may control the display such that the driving information is restricted from being displayed on the first screen, and the specific object including the driving information may be displayed on a designated position in the card view area when the card view are is displayed.

According to one or more embodiment, a vehicle may include the display device described above. In some embodiments, the vehicle may a vehicle display device, which includes a display configured to display a first screen including driving information related to the vehicle and display a card view area on the first screen, the card view area including objects associated with an execution of a plurality of applications; and a processor configured to display an execution screen of a first application corresponding to a first object, which is included in the card view area, on a first portion of the card view area, in response to receiving a selection input applied to the first object, wherein the processor controls the display to output an execution screen of a second application corresponding to a second object, which is included in the card view area, on a second portion adjacent to the first portion of the card view area, in response to receiving a selection input applied to the second object while the execution screen of the first application is displayed, and the first and second portions are sub-areas having expanded sizes than corresponding objects, and remaining objects of the card view area are restricted from being displayed while the sub-areas are displayed.

### Advantageous Effects of Invention

Hereinafter, effects of a vehicle monitoring device, a vehicle including the same, and an operating method of the vehicle will be described.

According to some embodiments, execution screens of a plurality of applications may be simultaneously checked and used inside the vehicle through a display device, which is mounted on a front seat of a vehicle and has a larger screen. In some embodiments, a plurality of expanded App screens may be displayed side by side in a card view area through only a simple interaction on the display device, allowing a plurality of applications to be used simultaneously without screen switching and App control.

According to some embodiments, while using an execution screen of a single application or execution screens of a plurality of applications, search for and access to another application may be fast performed. In some embodiments, usability may further be improved by implementing direct access to a pre-designated application or a route guidance screen of the vehicle regardless of a current step.

According to some embodiments, accessible applications may be differently configured depending on a status of a vehicle, such as a driving mode or whether the vehicle is in a parked or stopped state, thereby satisfying both safe driving and provision of various entertainment. For example, when the vehicle is stopped or parked, a card view area may be reconfigured to access applications, which have not been provided in a traveling state for safe driving, are accessible. In case where the vehicle is capable of being driven in an autonomous driving mode, the card view area may be reconfigured to prioritize safety in a manual driving mode and to allow access to some applications, which do not interfere with driving, in the autonomous driving mode.

### Brief Description of Drawings

FIG. 1 is a diagram of an example of a vehicle according to an embodiment of the disclosure.
FIG. 2 is a diagram of the vehicle according to an embodiment at various angles.
FIGS. 3 and 4 are diagrams of an inside of the vehicle according to an embodiment.
FIGS. 5 and 6 are views referenced to explain various objects in relation to traveling (or driving) of the vehicle according to an embodiment.
FIG. 7 is a block diagram referenced to explain the vehicle according to an embodiment.
FIG. 8 is a diagram of an example of a vehicle display device according to an embodiment of the disclosure.
FIG. 9 is a block view of an exemplary configuration of FIG. 8.
FIG. 10 is an exemplary conceptual view for explaining a method of simultaneously displaying execution screens of a plurality of applications in a card view area displayed on a vehicle display device according to an embodiment.
FIG. 11 is an exemplary conceptual view for explaining a method of displaying a card view area according to an embodiment.
FIG. 12 is an exemplary conceptual view for explaining an area where execution screens of a plurality of applications are displayed, according to an embodiment.
FIG. 13 shows exemplary conceptual views of a method of searching for an object associated with an application while an expanded execution screen of an application is displayed in a card view area, according to an embodiment.
FIG. 14 is an exemplary conceptual view for explaining a method of additionally expanding an expanded execution screen of an application in a card view area, according to an embodiment.
FIG. 15 is an exemplary conceptual view for explaining a method of directly switching to a route guidance screen of a vehicle, according to an embodiment.
FIG. 16 is an exemplary conceptual view for explaining a method of entering a card view area including favorite applications, according to an embodiment.
FIG. 17 is a flowchart of a method of displaying objects included in a card view area by reconfiguring the card view area, according to an embodiment.
FIG. 18 is an exemplary conceptual view for explaining a method of providing a plurality of applications by grouping the plurality of applications in each object in a card view area, according to an embodiment.
FIG. 19 is a view of a state in which a vehicle display device according to an embodiment communicates with an external server or another device.

### Mode for the Invention

A description will now be given in detail according to one or more embodiments disclosed herein, with reference to the accompanying drawings, and regardless of reference numerals, the same or similar components are given the same reference number, and descriptions thereof will be omitted. The terms "module" and "unit" as used herein interchangeably or individually used to refer to a constituent element only for convenience in description in the specification and therefore are not themselves intended to take on different meanings or to depict different functions. In describing one or more embodiments disclosed herein, a detailed description of a related well-known technology will be omitted when it is determined that it would obscure the gist of the disclosure. The accompanying drawings are used to help easily understand the technical idea of the disclosure and it should be understood that the idea of the disclosure is not limited by the accompanying drawings. The idea of the disclosure should be construed to extend to any alterations, equivalents and substitutes besides the accompanying drawings.

The terms including an ordinal number such as first, second, and the like may be used to describe various elements, but the elements should not be limited by those terms. The terms are used merely for the purpose of distinguishing one element from another.

It will be understood that when a component is referred to as being "connected to" or "coupled to" another component, it may be directly connected to or coupled to another component or intervening components may be present. In contrast, when a component is referred to as being "directly connected to" or "directly coupled to" another component, it should be understood that there are no intervening components present.

As used herein, the singular form is intended to include the plural forms as well, unless otherwise specified in context.

Terms such as "include" or "has" as used herein should be understood that they are intended to indicate an existence of several components, functions or steps, disclosed in the specification, and it is also understood that greater or fewer components, functions, or steps may likewise be utilized.

A vehicle according to an embodiment may be understood as a conception including automobiles, motorcycles, and the like. Hereinafter, the vehicle will be described based on a car.

A vehicle according to the disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

The term "system" disclosed herein may include at least one of a server device or a cloud device, but is not limited thereto. For example, a system may include one or more server devices. As another example, a system may include one or more cloud devices. As another example, a system may be operated by including a server device and a cloud device together.

In the disclosure, the term "user terminal" or "user client" refers to a computing device and/or system, such as a vehicle (or an electrical component, device/system, or the like provided in the vehicle), or a user himself or herself.

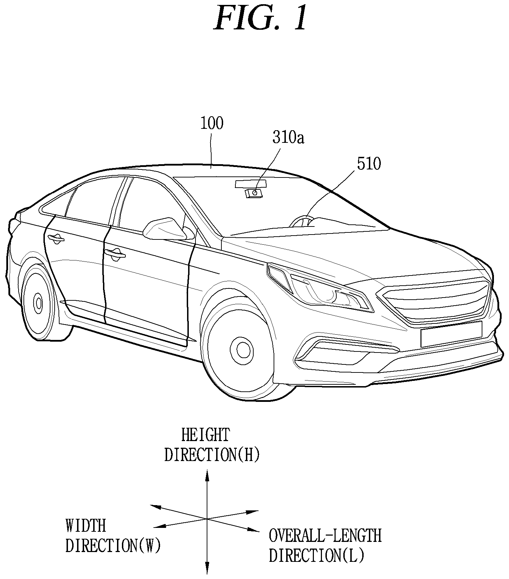

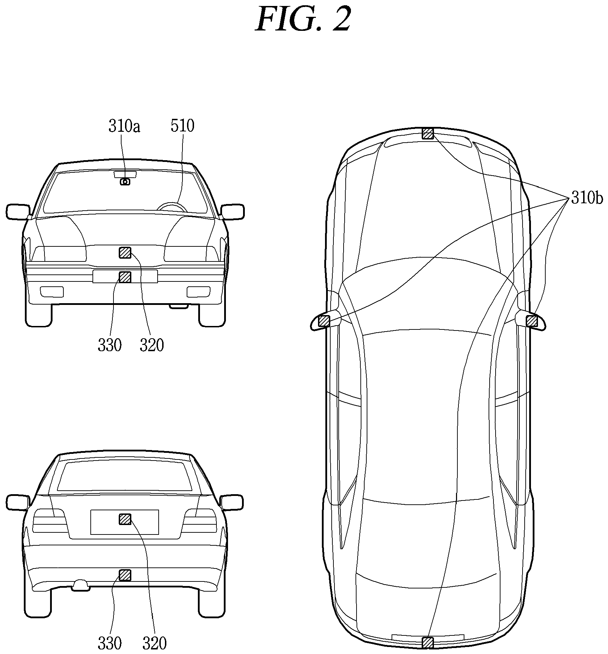

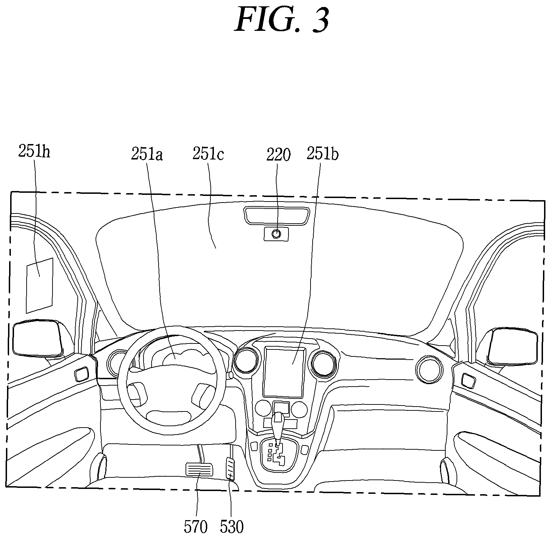

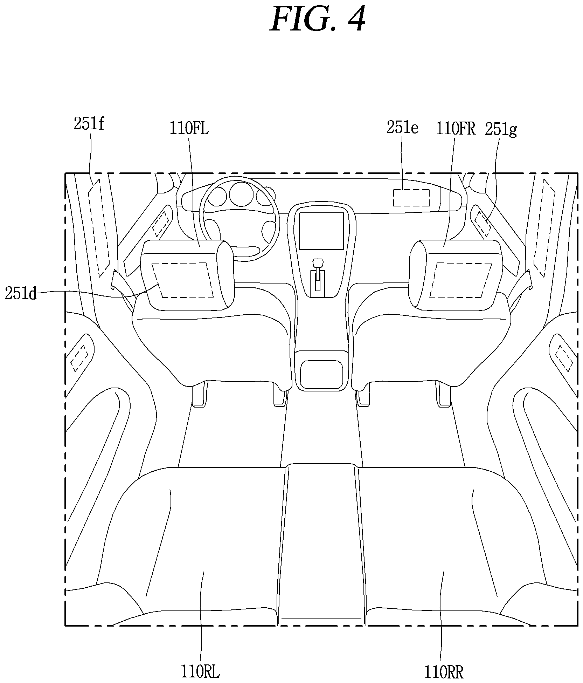

FIGS. 1 and 2 are diagrams of the outside of a vehicle according to an embodiment, and FIGS. 3 and 4 are diagrams of the inside of the vehicle.

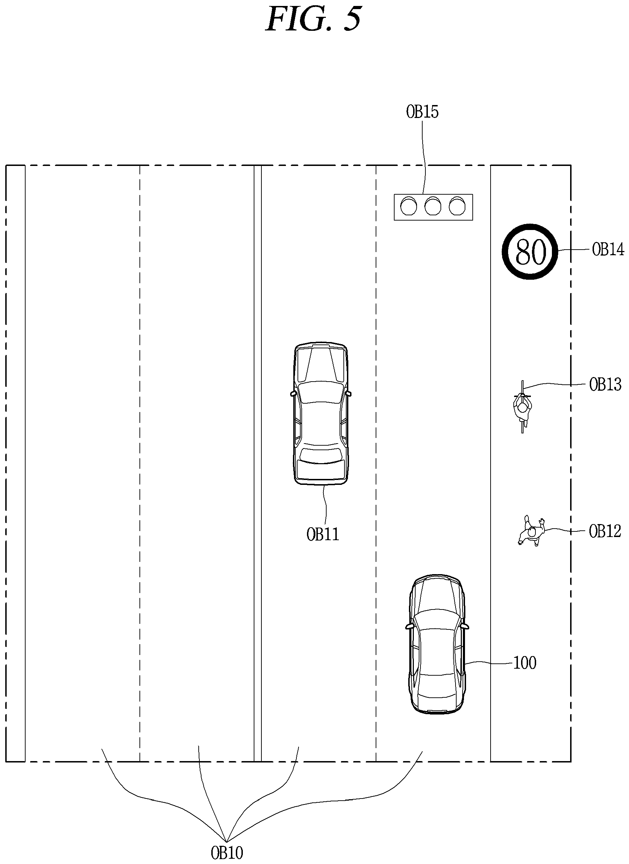

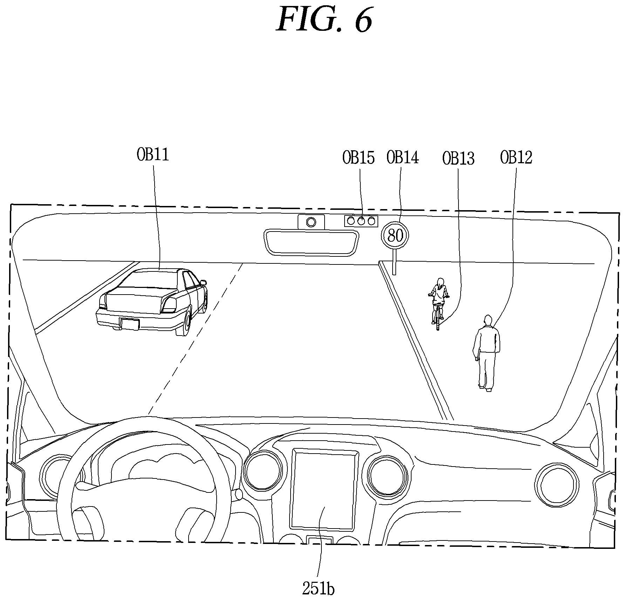

FIGS. 5 and 6 are view of various objects associated with traveling of the vehicle according to an embodiment.

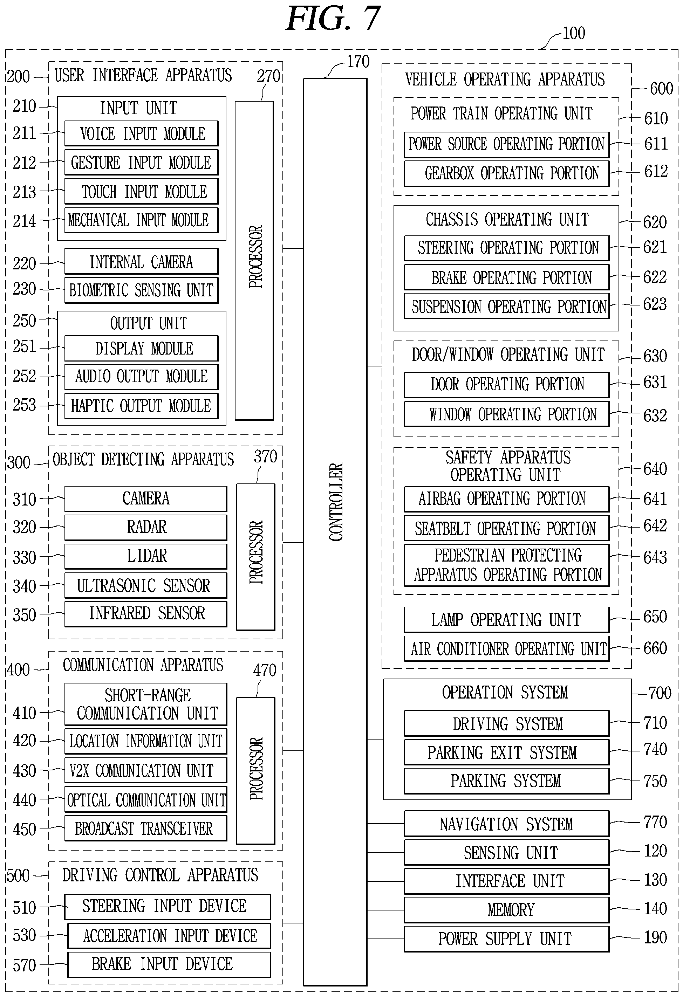

FIG. 7 is a block diagram referenced to explain the vehicle according to an embodiment. FIG. 7 is a block diagram referred for explaining the vehicle according to an embodiment.

Referring to FIGS. 1 through 7, a vehicle 100 may include wheels turning by a driving force, and a steering apparatus 510 for adjusting a driving (ongoing, moving) direction of the vehicle 100.

The vehicle 100 may be an autonomous vehicle. The vehicle 100 may be switched into an autonomous mode or a manual mode based on a user input. For example, the vehicle 100 may be converted from the manual mode into the autonomous mode or from the autonomous mode into the manual mode based on a user input received through a user interface apparatus 200 (hereinafter, referred to as 'user terminal').

The vehicle 100 may be switched into the autonomous mode or the manual mode based on driving environment information. The driving environment information may be generated based on object information provided from an object detection device 300. For example, the vehicle 100 may be switched from the manual mode into the autonomous mode or from the autonomous mode into the manual mode based on driving environment information generated in the object detection device 300. In an example, the vehicle 100 may be switched from the manual mode into the autonomous mode or from the autonomous mode into the manual mode based on driving environment information received through a communication device 400.

The vehicle 100 may be switched from the manual mode into the autonomous mode or from the autonomous module into the manual mode based on information, data or signal provided from an external device.

When the vehicle 100 is driven in the autonomous mode, the vehicle 100 may be driven based on a driving system 700. For example, the vehicle 100 may be driven based on information, data or signal generated in a driving system 710, a parking exit system 740 and a parking system 750.

When the vehicle 100 is driven in the manual mode, the vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 7, the vehicle 100 may include a user interface apparatus (hereinafter, referred to as 'user terminal') 200, an object detection device 300, a communication device 400, a driving operation device 500, a vehicle drive device 600, a driving system 700, a navigation system 770, a sensing unit 120, an interface 130, a memory 140, a controller 170, and a power supply unit 190.

According to embodiments, the vehicle 100 may include more components in addition to components to be explained in this specification or may not include some of those components to be explained in this specification.

The user interface device 200 is an apparatus for communication between the vehicle 100 and a user. The user interface device 200 may receive a user input and provide information generated in the vehicle 100 to the user. The vehicle 100 may implement user interfaces (Uls) or user experiences (UXs) through the user interface device (hereinafter, referred to as 'user terminal') 200.

The user interface device 200 may include an input unit 210, an internal camera 220, a biometric sensing unit 230, an output unit 250, and a processor 270. According to embodiments, the user interface device 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input part 211, a gesture input part 212, a touch input part 213, and a mechanical input part 214.

The audio input part 211 may convert a user's voice input into an electric signal. The converted electric signal may be provided to the processor 270 or the controller 170. The audio input part 211 may include at least one microphone.

The gesture input part 212 may convert a user's gesture input into an electric signal. The converted electric signal may be provided to the processor 270 or the controller 170.

The gesture input part 212 may include at least one of an infrared sensor and an image sensor for detecting the user's gesture input. According to embodiments, the gesture input part 212 may detect a user's three-dimensional (3D) gesture input. To this end, the gesture input part 212 may include a light emitting diode outputting a plurality of infrared rays or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170.

The touch input part 213 may include a touch sensor for detecting the user's touch input. According to an embodiment, the touch input part 213 may be integrated with the display 251 so as to implement a touch screen. The touch screen may provide an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170. The mechanical input part 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the image of the interior of the vehicle. The processor 270 may detect a user gesture from the internal image of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, auditory or tactile signal. The output unit 250 may include at least one of a display 251, an audio output part 252, and a haptic output part 253.

The display 251 may output graphic objects corresponding to various types of information. The display 251 may include at least one of a liquid crystal display (LCD), a thin film transistor-LCD (TFT LCD), an organic light-emitting diode (OLED), a flexible display, a three-dimensional (3D) display and an e-ink display.

The display 251 may be inter-layered or integrated with a touch input part 213 to implement a touch screen.

The display 251 may be implemented as a head up display (HUD). When the display 251 is implemented as the HUD, the display 251 may be provided with a projecting module so as to output information through an image which is projected on a windshield or a window.

The display 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

Meanwhile, the user interface device 200 may include a plurality of displays 251a to 251g.

The display 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output part 252 converts an electric signal provided from the processor 270 or the controller 170 into an audio signal for output. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user can recognize such output.

The processor (hereinafter, referred to as 'controller') 270 may control an overall operation of each unit of the user interface device 200. According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

Meanwhile, the user interface device 200 may be named a display device for vehicle. The user interface device 200 may operate under the control of the controller 170.

The object detection device 300 is a device for detecting an object located outside the vehicle 100. Examples of the object may include a variety of objects associated with driving (operation) of the vehicle 100. Referring to FIGS. 5 and 6, examples of an object O may include a traffic lane OB10, another vehicle OB11, a pedestrian OB12, a two-wheeled vehicle OB13, traffic signals OB14 and OB15, light, a road, a structure, a speed hump, a terrain feature, an animal, and the like.

The lane OB10 may be a traveling lane, a lane adjacent to the traveling lane, or a lane along which another vehicle in an opposite direction travels. The lanes OB10 may conceptually include left and right lines forming a lane.

The another vehicle OB11 may be a vehicle which travels in the vicinity of the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located in the vicinity of a road and fixed on the ground. Examples of the structure may include a streetlamp, a roadside tree, a building, an electric pole, a traffic light, a bridge, and the like.

Examples of the terrain feature may include a mountain, a hill, and the like.

Meanwhile, objects may be classified into moving objects and stationary objects. Examples of the moving object may conceptually include another vehicle and a pedestrian. Examples of the stationary object may conceptually include a traffic signal, a road, and a structure.

The object detection device 300 may include a camera 310, a radar 320, a LiDAR 330, an ultrasonic sensor 340, an infrared sensor 350 and at least one processor, such as the processor 370.

According to an embodiment, the object detection device 300 may further include other components in addition to the components described, or may not include some of the components described.

The camera 310 may be located at an appropriate portion on the exterior of the vehicle to acquire an image of the exterior of the vehicle. The camera 310 may be a mono camera, a stereo camera 310a, an AVM (Around View Monitoring) camera 310b, or a 360-degree camera.

For example, the camera 310 may be disposed adjacent to a front windshield within the vehicle to acquire an image of the surroundings in front of the vehicle. Alternatively, the camera 310 may be disposed adjacent to a front bumper or a radiator grill.

For example, the camera 310 may be disposed adjacent to rear glass within the vehicle to acquire an image of the surrounding behind the vehicle. Alternatively, the camera 310 may be disposed adjacent to a rear bumper, a trunk, or a tail gate.

For example, the camera 310 may be disposed adjacent to at least one of side windows within the vehicle to acquire an image of the surroundings alongside the vehicle. Alternatively, the camera 310 may be disposed adjacent to a side mirror, a fender, or a door.

The camera 310 may provide an acquired image to the processor 370.

The radar 320 may include an electromagnetic wave transmission unit and an electromagnetic wave reception unit. The radar 320 may be implemented in a pulse radar scheme or a continuous wave radar scheme according to a principle of emitting radio waves. The radar 320 may be implemented in a frequency modulated continuous wave (FMCW) manner or a frequency shift Keying (FSK) manner according to a signal waveform, among the continuous wave radar methods.

The radar 320 may detect an object in a time of flight (TOF) manner or a phase-shift manner through the medium of electromagnetic waves, and detect a location of the detected object, a distance from the detected object and a relative speed with the detected object.

The LiDAR 320 may be disposed on an appropriate position outside the vehicle for detecting an object located at the front, rear or side of the vehicle.

The LiDAR 330 may include a laser transmission unit and a laser reception unit. The LiDAR 330 may be implemented using a time of flight (TOF) scheme or a phase-shift scheme.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object using a time of flight (TOF) technique or a phase-shift technique, with laser as a medium, and may detect a location of the detected object, a distance to the detected object, and a relative speed with respect to the detected object.

The radar 330 may be disposed on an appropriate position outside the vehicle for detecting an object which is located at a front, rear or side of the vehicle.

The ultrasonic sensor 340 may include an ultrasonic wave transmission unit and an ultrasonic wave reception unit. The ultrasonic sensor 340 may detect an object using an ultrasonic wave and detect a position of the detected object, a distance to the detected object, and a relative speed with respect to the detected object.

The ultrasonic sensor 340 may be disposed at an appropriate position on the exterior of the vehicle to detect an object located in front of, behind, or alongside the vehicle.

The infrared sensor 350 may include an infrared light transmission unit and an infrared light reception unit. The infrared sensor 340 may detect an object using infrared light, and detect a position of the detected object, a distance to the detected object, and a relative speed with respect to the detected object.

The infrared sensor 350 may be disposed at an appropriate position on the exterior of the vehicle to detect an object located in front of, behind, of alongside the vehicle.

The processor 370 may control an overall operation of each unit of the object detection device 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave, resulting from an emitted electromagnetic wave being reflected off the object, and track the object. The processor 370 may execute operations, such as calculation of a distance to the object, calculation of a relative speed with respect to the object, and the like, based on the electromagnetic wave.

The processor 370 may detect an object based on a reflected laser beam, resulting from an emitted laser beam being reflected off the object, and track the object. The processor 370 may execute operations, such as calculation of a distance to the object, calculation of a relative speed with respect to the object, and the like, based on the laser beam.

The processor 370 may detect an object based on a reflected ultrasonic wave, resulting from an emitted ultrasonic wave being reflected off the object, and track the object. The processor 370 may execute operations, such as calculation of a distance to the object, calculation of a relative speed with respect to the object and the like, based on the ultrasonic wave.

The processor 370 may detect an object based on reflected infrared light, resulting from emitted infrared light being reflected from the object, and track the object. The processor 370 may execute operations, such as calculation of a distance to the object, calculation of a relative speed with respect to the object and the like, based on the infrared light.

According to an embodiment, the object detection device 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detection device 300, the object detection device 300 may operate according to the control of a processor of an apparatus within the vehicle 100 or the controller 170.

The object detection device 400 may operate under the control of the controller 170.

The communication device 400 is a device for performing communication with an external device. Here, the external device may be another vehicle, a mobile terminal or a server.

To perform communication, the communication device 400 may include a transmitting antenna, a receiving antenna, and at least one of a radio frequency (RF) circuit and an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

In some embodiments, the communication device 400 may further include other components in addition to the components described, or may not include some of the components described.

The short-range communication unit 410 is a unit for facilitating short-range communications. The short-range communication unit 410 may support such short-range communications using at least one of the following technologies: BLUETOOTHTM, radio frequency identification (RFID), infrared data association (IrDA), ultra-wideband (UWB), ZigBee, near field communication (NFC), wireless-fidelity (Wi-Fi), Wi-Fi Direct, wireless universal serial bus(USB), and the like.

The short-range communication unit 410 may construct short-range wireless area networks to perform short-range communication between the vehicle 100 and at least one external device.

The location information unit 420 is a unit for acquiring location information. For example, the location information unit 420 may include a global positioning system (GPS) module or a differential global positioning system (DGPS) module.

The V2X communication unit 430 is a unit for performing wireless communications with a server (vehicle to infrastructure (V2I)), another vehicle (vehicle to vehicle (V2V)), or a pedestrian (vehicle to pedestrian (V2P)). The V2X communication unit 430 may include an RF circuit capable of implementing protocols for communication with an infrastructure (V2I), communication between vehicles (V2V) and communication with a pedestrian (V2P).

The optical communication unit 440 is a unit for performing communication with an external device, with light as a medium. The optical communication unit 440 may include an optical transmission part for converting an electric signal into an optical signal and transmitting the optical signal to the outside, and an optical reception part for converting the received optical signal into the electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication device 400.

According to an embodiment, the communication device 400 may include a plurality of processors 470 or may not include any processor 470.

When the processor 470 is not included in the communication device 400, the communication device 400 may operate according to the control of a processor of another device within the vehicle 100 or the controller 170.

Meanwhile, the communication device 400 may implement a display device for a vehicle together with the user interface device 200. In this instance, the display device for the vehicle may be referred to as a telematics apparatus or an audio video navigation (AVN) device.

The communication device 400 may operate according to the control of the controller 170.

The driving operation device 500 is a device for receiving a user input for driving.

In a manual mode, the vehicle 100 may be operated based on a signal provided by the driving operation device 500.

The driving operation device 500 may include a steering input device 510, an acceleration input device 530 and a brake input device 570.

The steering input apparatus 510 may receive an input regarding a driving (ongoing) direction of the vehicle 100 from the user. The steering input apparatus 510 is preferably configured in the form of a wheel, which the user rotates to apply a steering input. According to some embodiments, the steering input device may also be configured in a shape of a touch screen, a touch pad or a button.

The acceleration input device 530 may receive an input for accelerating the vehicle 100 from the user. The brake input apparatus 570 may receive an input for decelerating the vehicle 100 from the user. The acceleration input apparatus 530 and the brake input apparatus 570 are preferably configured in the form of a pedal. In some embodiments, the acceleration input apparatus or the brake input apparatus may also be configured in a shape of a touch screen, a touch pad or a button.

The driving operation device 500 may operate according to the control of the controller 170.

The vehicle drive device 600 is an apparatus for electrically controlling operations of various devices within the vehicle 100.

The vehicle drive device 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive device 600 may further include other components in addition to the components described, or may not include some of the components described.

Meanwhile, the vehicle drive device 600 may include a processor. Each unit of the vehicle drive device 600 may include its own processor.

The power train drive unit 610 may control an operation of a power train apparatus.

The power train drive unit 610 may include a power source drive part 611 and a transmission drive part 612.

The power source drive part 611 may control a power source of the vehicle 100.

For example, in the case where a fossil fuel-based engine is the power source, the power source drive part 611 may perform electronic control on the engine. Accordingly, an output torque and the like of the engine can be controlled. The power source drive part 611 may adjust the engine output torque under the control of the controller 170.

For example, in the case where an electric energy-based motor is the power source, the power source drive part 611 may perform control on the motor. The power source drive part 611 may adjust a rotating speed, a torque and the like of the motor under the control of the controller 170.

The transmission drive part 612 may perform control on a transmission. The transmission drive part 612 may adjust a state of the transmission. The transmission drive part 612 may change the state of the transmission to Drive (D), Reverse (R), Neutral (N) or Park (P).

In some examples, when an engine is the power source, the transmission drive part 612 may adjust a gear-engaged state in Drive (D).

The chassis drive unit 620 may control an operation of a chassis apparatus. The chassis drive unit 620 may include a steering drive part 621, a brake drive part 622 and a suspension drive part 623.

The steering drive part 621 may perform electronic control on a steering apparatus within the vehicle 100. The steering drive part 621 may change the driving direction of the vehicle.

The brake drive part 622 may perform electronic control on a brake apparatus within the vehicle 100. For example, the brake drive part 622 may reduce the speed of the vehicle 100 by controlling operations of brakes provided on wheels.

In some examples, the brake drive part 622 may individually control a plurality of brakes. The brake drive part 622 may apply a different braking force to each of the plurality of wheels.

The suspension drive part 623 may perform electronic control on a suspension apparatus within the vehicle 100. For example, when a road surface is uneven, the suspension drive part 623 may control the suspension apparatus to reduce vibration of the vehicle 100. In some examples, the suspension drive part 623 may individually control a plurality of suspensions.

The door/window drive part 630 may perform electronic control on a door apparatus or a window apparatus within the vehicle 100.

The door/window drive unit 630 may include a door drive part 631 and a window drive part 632.

The door drive part 631 may control the door apparatus. The door drive part 631 may control opening or closing of a plurality of doors included in the vehicle 100. The door drive part 631 may control opening or closing of a trunk or a tail gate. The door drive part 631 may control opening or closing of a sunroof.

The window drive part 632 may perform electronic control on the window apparatus. The window drive part 632 may control opening or closing of a plurality of windows of the vehicle 100.

The safety apparatus drive unit 640 may perform an electronic control for various safety apparatuses within the vehicle 100.

The safety apparatus drive unit 640 may include an airbag drive part 641, a seatbelt drive part 642 and a pedestrian protection apparatus drive part 643.

The airbag drive part 641 may perform an electronic control for an airbag apparatus within the vehicle 100. For example, when a risk is detected, the airbag drive part 641 may control the airbag to be deployed.

The seatbelt drive part 642 may perform an electronic control for a seatbelt apparatus within the vehicle 100. For example, the seatbelt drive part 642 may control passengers to be motionlessly seated in seats 110FL, 110FR, 110RL, 110RR using seatbelts upon a detection of a risk.

The pedestrian protection apparatus drive part 643 may perform an electronic control for a hood lift and a pedestrian airbag. For example, upon detection of a collision with a pedestrian, the pedestrian protection apparatus drive part 643 may control the hood lift and the pedestrian airbag to be deployed.

The lamp drive part 650 may perform electronic control on various lamp apparatuses within the vehicle 100.

The air-conditioner drive unit 660 may perform an electronic control for an air conditioner within the vehicle 100. For example, the air-conditioner drive unit 660 may control the air conditioner to supply cold air into the vehicle when internal temperature of the vehicle is high.

The vehicle drive device 600 may include a processor. Each unit of the vehicle drive device 600 may include its own processor.

The vehicle drive device 600 may operate under the control of the controller 170.

The driving system 700 is a system that controls various driving modes (or functions) of the vehicle 100. The driving system 700 may operate in the autonomous mode.

The driving system 700 may include a traveling system 710, a parking-lot departure system 740 and a parking system 750.

In some embodiments, the driving system 700 may further include other components in addition to components to be described, or may not include some of the components to be described.

Meanwhile, the driving system 700 may include a processor. Each unit of the driving system 700 may include its own processor.

In some embodiments, the driving system may be implemented by the controller 170 when it is implemented in a software configuration.

Meanwhile, according to embodiment, the driving system 700 may be a concept including at least one of the user interface device 200, the object detection device 300, the communication device 400, the vehicle drive device 600, and the controller 170.

The driving system 710 may perform driving of the vehicle 100.

The traveling system 710 may perform traveling of the vehicle 100 by providing a control signal to the vehicle drive device 600, in response to reception of navigation information from a navigation system 770. The traveling system 710 may perform driving of the vehicle 100 by providing a control signal to the vehicle drive device 600, in response to reception of object information from the object detection device 300. The traveling system 710 may perform driving of the vehicle 100 by providing a control signal to the vehicle drive device 600, in response to reception of a signal from an external device through the communication device 400.

The parking-lot departure system 740 may perform a departure maneuver for the vehicle 100.

The driving system 740 may receive navigation information from a navigation system 770, transmit a control signal to the vehicle drive device 600, and perform driving of the vehicle 100. The parking-lot departure system 740 may perform a departure maneuver for the vehicle 100 by providing a control signal to the vehicle drive device 600, in response to reception of object information from the object detection device 300. The parking-lot departure system 740 may receive a signal from an external device through the communication device 400, transmit a control signal to the vehicle drive device 600, and perform the exit of the vehicle 100 from the parking lot.

The parking system 750 may park the vehicle 100 in a parking space (or a parking lot).

The parking system 750 may receive navigation information from the navigation system 770, transmit a control signal to the vehicle drive device 600, and park the vehicle 100. The parking system 750 may park the vehicle 100 in a parking space by providing a control signal to the vehicle drive device 600, in response to reception of object information from the object detection device 300. The parking system 750 may park the vehicle 100 in a parking space by providing a control signal to the vehicle drive device 600, in response to reception of a signal from an external device through the communication device 400.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication device 400.

In some implementations, the navigation system 770 may be classified as a sub component of the user interface device 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detection sensor, a heading sensor, a gyro sensor, a position module, a vehicle forward/reverse movement sensor, a battery sensor, a fuel sensor, a tire sensor, a steering sensor based on the rotation of a steering wheel, an in-vehicle temperature sensor, an in-vehicle humidity sensor, an ultrasonic sensor, an illumination sensor, an accelerator pedal position sensor, a brake pedal position sensor, and the like.

The sensing unit 120 may acquire sensing signals with respect to vehicle-related information, such as a posture, a collision, an orientation, a location (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface 130 may serve as a path to various types of external devices that are connected to the vehicle 100. For example, the vehicle interface 130 may include a port that is connectable to a mobile terminal, and may be connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the vehicle interface 130, the vehicle interface 130 may supply electric energy, supplied from a power supply unit 190, to the mobile terminal under the control of the controller 170.

The memory 140 is electrically connected to the controller 170. The memory 140 may store basic data for each unit, control data for controlling the operation of each unit, and input/output data. Examples of the memory 140 may include various hardware storage devices, such as a ROM, a RAM, an EPROM, a flash drive, a hard drive, and the like. The memory 140 may store various data for the overall operation of the vehicle 100, such as programs for the processing or control by the controller 170.

According to embodiments, the memory 140 may be integrated with the controller 170 or implemented as a sub component of the controller 170.

The controller 170 may control an overall operation of each unit of the vehicle 100. The controller 170 may be referred to as an electronic control unit (ECU).

The power supply unit 190 may supply power required for an operation of each element according to the control of the controller 170. In particular, the power supply unit 190 may receive power supplied from a battery inside the vehicle.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Hereinafter, a description will be given in detail of a vehicle display device having a large screen according to the disclosure, and a method of accessing a wider range of entertainment quickly and easily and simultaneously displaying execution screens of a plurality of applications, by using the vehicle display device.

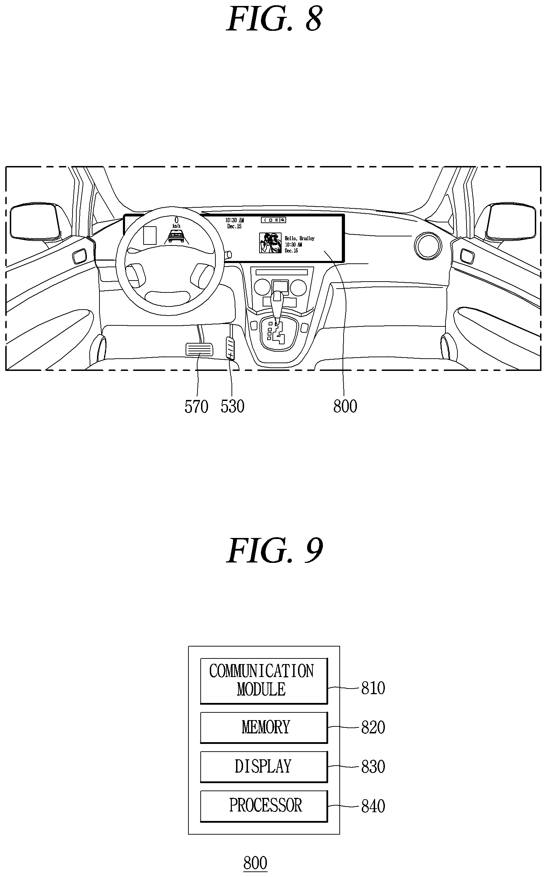

FIG. 8 is a diagram of an example of a vehicle display device 800 according to an embodiment of the disclosure. As illustrated, the vehicle display device 800 according to the disclosure may include a display, which is mounted on the front of a front seat of a vehicle and has a horizontally long large-screen.

For example, the display of the vehicle display device 800 may include a display area (region) which is expanded from a steering wheel area, in which dashboard information of the vehicle is displayed, to an instrument area. In another example, the display of the vehicle display device 800 may include a display area which is expanded from a steering wheel area where dashboard information of the vehicle is displayed to the front of an occupant seat via an instrument area. In still another example, the display of the vehicle display device 800 may include a display area over an entire windshield of the vehicle.

In this way, when the display of the vehicle display device 800 is configured with a large screen which is long in a horizontal direction, the display may output (display) information related to the status of the vehicle, such as accumulated driving information, engine tachometer and speedometer, and warning light information, in a partial area (hereinafter, referred to as 'first area'), while displaying a screen associated with entertainment in another area (hereinafter, referred to as 'second area'). In such a case, the first area may be located adjacent to a driver seat, and the second area may be located away from the driver seat.

In case where information related to the status of the vehicle is displayed in the first area of the display of the vehicle display device 800, information related to the status of the vehicle may be displayed as a default screen when a vehicle engine is turned on. In this instance, the displayed information related to the status of the vehicle may not be output any more when the vehicle engine is turned off.

When a screen associated with entertainment is displayed in the second area of the display of the vehicle display device 800, a plurality of objects corresponding to various accessible applications may be displayed in a manner of being overlaid on a default screen in the first area. In this instance, the plurality of objects may be displayed in a form of card views which are dragged to right and left for retrieval.

The second area may be implemented in a smaller size than the first area so as not to obscure information related to the status of the vehicle displayed in the first area. Alternatively, when the second area is overlaid on the entire first area, the transparency of at least a portion of the second area may be increased so that information displayed in the first area may be visible.

FIG. 9 is a block view of an exemplary configuration of FIG. 8.

Referring to FIG. 9, a vehicle display device 800 according to the disclosure may include a communication module 810, a memory 820, a display 830, and a processor 840. However, greater or fewer components may be included.

The communication module 810 may be configured to perform communication with the vehicle using a wired/wireless communication method. The communication module 810 may receive information related to the status of the vehicle.

The communication module 810 may be configured to communicate with one or more external devices using a wireless communication method. To this end, the communication module 810 may include a first communication module for communicating with the vehicle and a separate second communication module for communicating with the one or more external devices.

The communication module 810 may receive data/information about a driving (traveling) status of the vehicle (e.g., whether the vehicle is traveling, stopped, or parked) and a driving mode (e.g., an autonomous driving mode or manual driving mode) through the first communication module. The communication module 810 may transmit the data/information about the driving status and driving mode of the vehicle, which is received through the first communication module, to the processor 840, and control the processor 840 to vary information to be displayed on the display 830 or a display method on the basis of the received driving status and driving mode of the vehicle.

The communication module 810 may receive vehicle surrounding information (e.g., location-related information, surrounding area information, and the like) and surrounding environment information (e.g., weather information, and traffic situation information) through the second communication module. The communication module 810 may transmit vehicle surrounding information and surrounding environment information received through the second communication module to the processor 840, and control the processor 840 to provide or update information to be displayed or a display method on the display 830.

The memory 820 may store navigation information related to the vehicle and data associated with the navigation information. Additionally, the processor 840 may control the memory 820 to update pre-stored information on the basis of information received from an external device via the communication module 810. The memory 820 may also store data associated with information to be displayed on the display 830 (e.g., data associated with a user interface (UI), related commands, and the like).

The memory 820 may include a plurality of stacks for simultaneously displaying execution screens of a plurality of applications on the display 830. In this instance, the plurality of stacks may be dynamically allocated and/or deleted to correspond to the plurality of applications, respectively.

The display 830 may include any one of an LCD, a TFT LCD, an OLED, a flexible display, or a 3D display, or another display capable of displaying graphic objects. The display 830 may be inter-layered or integrated with a touch sensor to implement a touch screen.

The display 830 may include a first area in which graphic objects including vehicle driving information are displayed, and a second area in which graphic objects corresponding to applications associated with entertainment/settings are displayed. In some embodiments, some of the vehicle driving information displayed in the first area may be displayed as a graphic object corresponding to one application in the second area. In some embodiments, applications related to entertainment/settings displayed in the second area may be implemented to enable search, selection, and a plurality of executions, and may be implemented to have different accessible ranges depending on the driving status and driving mode of the vehicle.

The processor 840 may control the overall operation of the vehicle display device 800. The processor 840 may process data/information received through the communication module 810 and control the display 830 to display the processed data/information. The processor 840 may call or update information stored in the memory 820 to display the same on the display 830. The processor 840 may be electrically connected to the display 830, control indication on the display 830, and/or process an operation corresponding to an input received through the display 830.

Hereinafter, descriptions will be given of various user interfaces (Uls) and embodiments associated with simultaneously displaying and controlling execution screens of a plurality of applications together with vehicle driving information, through the large-screen display 830 of the vehicle display apparatus 800.

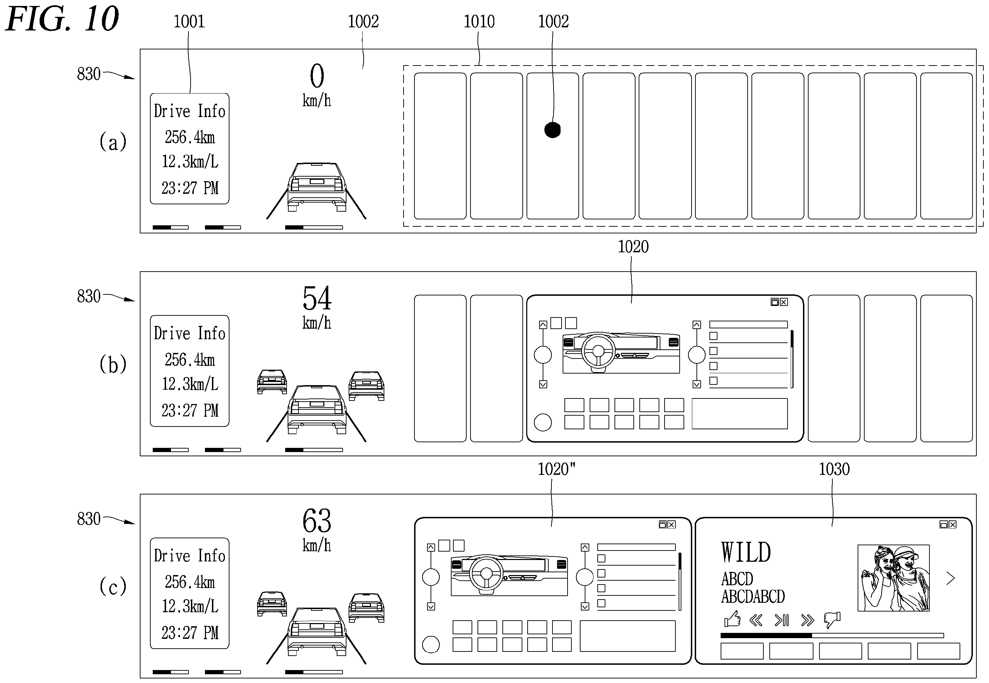

FIG. 10 is an exemplary conceptual view for explaining a method of simultaneously displaying execution screens of a plurality of applications in a card view area displayed on the display 830 of the vehicle display device 800 according to an embodiment.

As illustrated in FIG. 10, the display 830 may display a first screen 1002 including vehicle driving information 1001, for example, 'accumulated driving information." In this instance, the first screen may be displayed on the entire display 830.

In addition, a card view area 1010 including a plurality of objects associated with the execution of a plurality of applications may be displayed on the first screen. The card view area 1010 may be displayed to be overlaid on a portion of the first screen, for example, a portion of the first screen which extends from the right to the left.

According to an embodiment, the card view area 1010 may be displayed in a manner of being drawn out from a preset portion (e.g., 'edge') to be overlaid on the first screen, on the basis of a user input (hereinafter, referred to as 'first input'). Additionally, the card view area 1010 may disappear from the display 830 based on a continuous user input (hereinafter, referred to as 'second input').

A plurality of objects included in the card view area 1010 may correspond to specific applications, respectively, and each object may display information related to a corresponding specific application (e.g., the name of application, a representative image representing the application, an event occurred in the application, and the like). In an embodiment, the plurality of objects may be implemented in the form of card views adjacent to each other.

Each of the plurality of objects displayed in the card view area 1010 may be retrieved by being dragged to left and right based on a user command.

Each of the plurality of objects displayed in the card view area 1010 may be generated through a pre-installed application and/or a set registration process.

Depending on embodiments, the number of a plurality of objects displayed in the card view area 1010 may be limited in advance (e.g., 8 to 12), but the total number of objects to be accessible through retrieval may be greater than that. For example, the total number of accessible objects may vary depending on the available capacity of the memory 820 of the vehicle display device 800.

In the first screen 1002, the vehicle driving information 1001 may be displayed in a pre-designated area, for example, a portion of a left area of the display 830 or an area corresponding to a driver's gaze.

According to an embodiment, the first screen 1002 may include a panoramic background that changes over time. The panoramic background may be any one of an ADAS view, an AR navigation screen, or a default screen of the vehicle 100. For example, the panorama background may be preset through a user input. In this case, the panoramic background of the first screen 1002 may be hidden by the card view area 1010 displayed on the first screen 1002.

The card view area 1010 may be displayed to be overlaid on a designated area of the panoramic background of the first screen 1002, for example, a right area occupying about 2/3 of the card view area 1010.

When a selection input is applied to (received on) a specific object 1002 among a plurality of card view-type objects (hereinafter, referred to as 'card view objects') included in the card view area 1010, the processor 840 (FIG. 9) may access a specific application (e.g., an audio playback application) corresponding to the specific object 1002, which has received the selection input, to execute and display the corresponding application.

According to an embodiment, an execution screen 1020 of an application (hereinafter, referred to as 'first application') corresponding to the selected card view object 1002 may be displayed in an expanded sub-area (hereinafter, referred to as 'first sub-area') within the card view area 1010. In this instance, the first sub-area may be generated and displayed in a designated area on the basis of an original position of the selected card view object.

In some embodiments, the card view object 1002 selected in (a) of FIG. 10 may be located third from the left in the card view area 1010, and thus the corresponding first sub-area may be an area expanded in a right direction from the original position of the selected card view object 1002.

In this instance, the first sub-area may be an area which is enlarged horizontally to have a size larger than the size of the selected card view object 1002. Additionally, some card view objects included in the card view area 1010 may be obscured or hidden by the first sub-area.

In an embodiment, the execution screen 1020 of a first application displayed in the first sub-area may be a screen corresponding to a specific depth/stage of the corresponding application. For example, the execution screen 1020 of the first application may be a screen that has entered several stages of depth rather than an initial screen for the execution of the application. To this end, a specific depth to directly enter may be preset during a registration process of the card view object 1002.

In this way, while the execution screen 1020 of the first application corresponding to the selected card view object 1002 is displayed in the card view area 1010, a selection input for another card view object (hereinafter, referred to as 'second object') included in the card view area 1010 may be received.

The processor 840 may recognize the selection input for the second object while the execution screen 1020 of the first application is displayed, and determine whether the location of the second object is on the left or right of the first sub-area in which the execution screen 1020 of the first application is displayed. The processor 840 may then execute an application (hereinafter, referred to as 'second application') corresponding to the second object, generate a sub-area (hereinafter, referred to as 'second sub-area') for displaying an execution screen of the second application at a determined location based on the determination, and display the generated second sub-area.

For example, when a card view object located on the right of the first sub-area, in which the execution screen 1020 of the first application is displayed, in (b) of FIG. 10 is selected as the second object, the second sub-area in which an execution screen 1030 of the second application corresponding to the second object is displayed, as illustrated in (c) of FIG. 10, may be displayed on the right of the first sub-area.

In this instance, the location of the first sub-area may be adjusted as the second sub-area is displayed. That is, the location of the first sub-area is shifted to the left by a certain area due to the second sub-area, and the first and second sub-areas may be displayed in such a way that the first and second sub-areas are adjacent to each other and cover the entire card view area 1010. Accordingly, the remaining card view objects in the card view area 1010 may be restricted from being displayed.

The sum of a first portion occupied by the first sub-area and a second portion occupied by the second sub-area may correspond to the size of the card view area 1010. For example, the total horizontal size of the first and second sub-areas may be the same as or similar to the horizontal size of the card view area 1010.

In some embodiments, although not shown, when one of the execution screen 1020" of the first application or the execution screen 1030 of the second application is terminated, the location of the execution screen 1020" of the first application or the execution screen 1030 of the second application may change based on an original display location of a corresponding object.

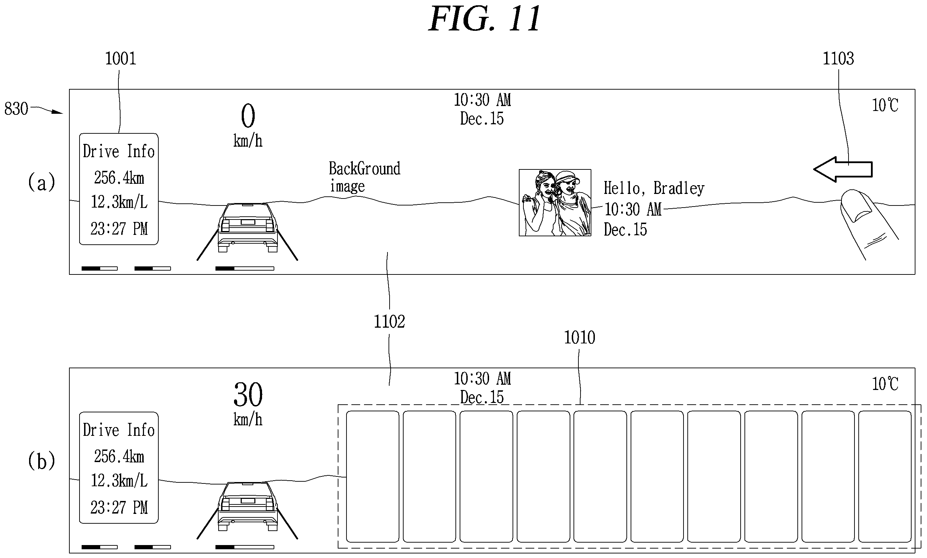

Hereinafter, a detailed description will be given of examples of various user interactions related to a card view area 1010 displayed on a display 830 of a vehicle display device according to an embodiment of the disclosure, with reference to FIGS. 11 to 16.

First, FIG. 11 is an exemplary view of a method of displaying a card view area 1010 by drawing out the card view area 1010 according to an embodiment.

The processor 840 of the vehicle display device 800 may display only a first screen, which includes vehicle driving information 1001, as an initial screen on the display 830. In this instance, the first screen may include an image, such as an ADAS view, an AR navigation screen, or a user-set album screen, as a panoramic background.

In a state where the first screen is displayed on the display 830, when receiving an input with respect to a specific area/preset portion of the display 830, for example, a right edge, the processor 840 may control the display 830 so that the card view area 1010 is drawn out like a drawer along an input direction of the received input while displaying (maintaining) the first screen.

In some embodiments, in FIG. 11, while an ADAS screen is displayed as the first screen 1102, when a drag/flicking input 1103 applied from a right edge to the left is received as illustrated in (a) of FIG. 11, the card view area 1010 may be displayed as if it is drawn out from the right edge as illustrated in (b) of FIG. 11.

In other embodiments, although not illustrated, when a drag/flicking input applied from a left area or left edge of the card view area 1010 toward the right is received while the card view area 1010 is displayed, the card view area 1010 may disappear as if it is drawn into the right edge.

In an embodiment, the vehicle driving information 1001 included in the first screen 1102 may be switched to a specific card view object in the card view area 1010 on the first screen 1102 at the time when the card view area 1010 is displayed. In this instance, when the card view area 1010 is no longer displayed on the display 830 (however, the vehicle ignition is maintained on), the vehicle driving information 1001 may be displayed again in a designated area of the first screen 1102, as illustrated in (a) of FIG. 11.

Accordingly, an occupant and the like may draw out and use the card view area 1010 when necessary and draw in the card view area 1010 when the card view area 1010 is not needed any more or interferes with safe driving, thereby simplifying the display and improving usability.

### [Execution and display of a plurality of applications in card view area]

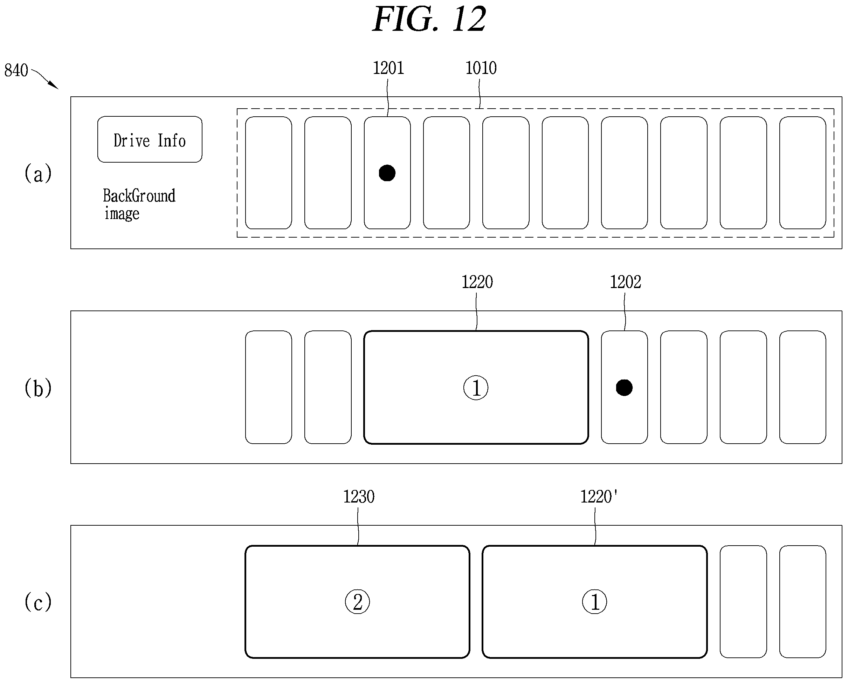

FIG. 12 is an exemplary conceptual view for explaining another embodiment in relation to an area, in which execution screens of a plurality of applications are displayed, in the card view area 1010, according to an embodiment.

In a state where the card view area 1010 is displayed in the display 830 to be overlaid on the first screen as the panoramic background, when a selection input is applied to a first object in the card view area 1010, the processor 840 may display an execution screen of a first application corresponding to the first object in a first sub-area corresponding to a first portion of the card view area 1010.

In this instance, the first portion occupied by the first sub-area may mean an area expanded based on a display location of the first object in the card view area 1010. Referring to (a) of FIG. 12, for example, an area in which the size of the first object 1201 is enlarged by about four times in the horizontal direction is depicted as the first sub-area. However, the first sub-area is not limited thereto, and may be configured to occupy an area further expanded horizontally (e.g., to have a size as large as five card view objects).

In the state where the first sub-area is displayed in the card view area 1010, when a selection input is applied to another object, for example, a second object, in the card view area 1010, the processor 840 may display an execution screen of a second application corresponding to the second object in a second sub-area corresponding to a second portion of the card view area 1010.

In this instance, the second portion occupied by the second sub-area may mean an area expanded based on the display location of the second object, relative to the first sub-area. Additionally, the location of the first portion may change, in response to the generation of the second portion.

In an embodiment, the processor 840 may control the second sub-area, in which the execution screen of the second application is displayed, to be generated in an area on the left of the first sub-area, for example, adjacent to the driver seat. This may result from determining an application, which is selected and executed lately among a plurality of applications, as meeting the needs of the occupant and the like, and processing an execution screen of the corresponding application to be displayed in the foreground. For example, an execution screen of the latest application may be located in the foreground.

For example, in (b) of FIG. 12, while an execution screen 1220 of a first application is displayed in a first sub-area ①, a card view object located on the right of the first sub-area ① may be selected as a second object 1202, but it may be confirmed as illustrated in (c) of FIG. 12 that a second sub-area ② corresponding to an execution screen 1230 of a second application corresponding to the second object 1202 is rather located on the left of the first sub-area ①. Accordingly, it may be confirmed that a first portion 1220' corresponding to the first sub-area ① has changed in position and is displayed with being slightly shifted to the right compared to a previous location.

According to an embodiment, in the case where execution screens of three applications are allowed to be displayed at the same time, the first portion corresponding to the first sub-area ① and the second portion corresponding to the second sub-area ② may be further shifted to the right, and a third sub-area where an execution screen of a newly selected application (hereinafter, referred to as 'third application') is displayed may be located on the front, for example, the leftmost side of the card view area 1010.

In another embodiment, the locations of the first and second sub-areas may change based on a user input. For example, in case where it is desired to make the first sub-area ① located on the left in (c) of FIG. 12, a gesture may be applied to drag/relocate the first sub-area ① toward the second sub-area ② while maintaining an input applied to the first sub-area ①. Accordingly, the processor 840 may control screen switching such that the first sub-area ① moves to the left and the second sub-area ② moves to the right.

As still another embodiment, an input applied to a boundary/frame of each of the first and second sub-areas may be moved toward an inside of the corresponding sub-area to reduce the size of the sub-area. Similarly, an input applied to the boundary/frame of each of the first and second sub-areas may be moved outward from the corresponding sub-area (e.g., a horizontally stretched gesture) to further enlarge the size of the sub-area.

### [Object search in card view area]

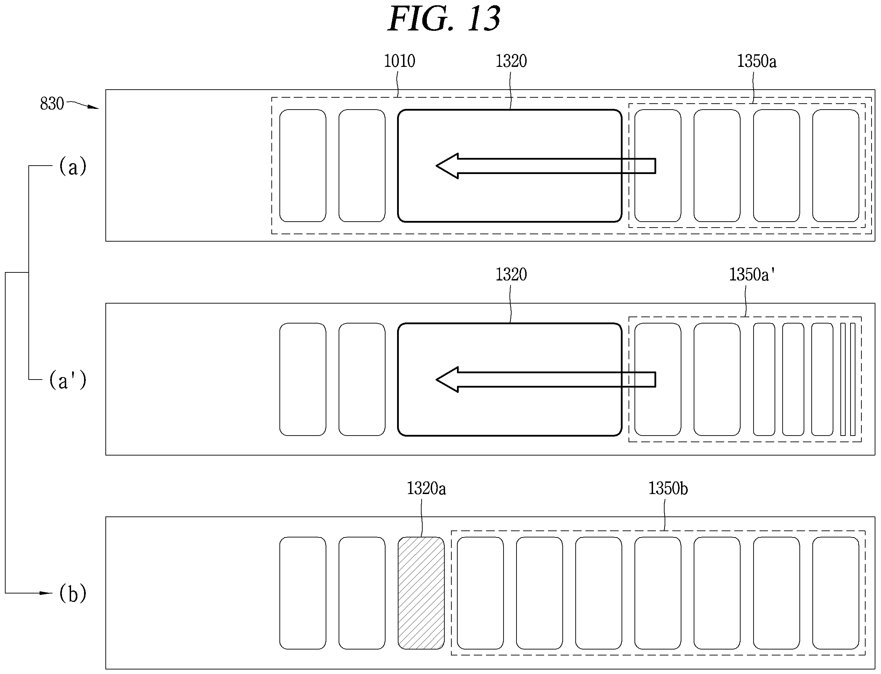

FIG. 13 shows exemplary conceptual views of a method of searching for an object associated with an application while an expanded execution screen of the application is displayed in a card view area, according to an embodiment.

While a first sub-area or first and second sub-areas are displayed in a card view area 1010, all or some of remaining objects may be obscured by the first sub-area or the second sub-area. In this state, an occupant and the like may immediately perform object search to determine whether another application is executed without terminating the first sub-area or the second sub-area.

To this end, the processor 840 of the vehicle display device 800 may display remaining objects obscured by a first portion, i.e., the third object, in response to an input received in the card view area 1010 for object search while an execution screen of a first application is displayed in the first portion.

For example, in (a) of FIG. 13, while the execution screen 1320 of the first application is displayed in the first sub-area in the card view area 1010, when a search input is received as an input applied to remaining objects 1350a is dragged in the left and right direction, as illustrated in (b) of FIG. 13, the size of the first sub-area may be reduced by a previous size of the card view object, and accordingly the remaining plurality of card view objects 1350b including hidden objects may be displayed.

For example, when an input applied to the remaining objects 1350a is not released but dragged to the left or right, the processor 840 may recognize the drag input as a search-start command and perform an object search mode.

In the object search mode, the size of the first sub-area corresponding to the execution screen of the previously executed first application may be reduced by, for example, the previous size of the card view object (1320a). However, the execution/reproduction of the execution screen of the first application may be maintained. Accordingly, the occupant and the like may keep displaying/executing/reproducing the execution screen of the first application while the object search mode is performed.

In some embodiments, as illustrated in (a') of FIG. 13, as the object search mode is executed, a display process 1350a' may be included in which some of registered card view objects, which have not been previously displayed, appear in the card view area 1010. In this instance, information indicating the total number of registered card view objects, although not shown, may be displayed as well.

The processor 840 may control the display 830 so that the third object is hidden again by the first portion when the object search is terminated. Accordingly, screen switching may be executed from the configuration illustrated in (b) of FIG. 13 to the configuration illustrated in (a) or (a') of FIG. 13. For example, the first portion 1320a that has been reduced in size may be displayed by being enlarged again to the previous size of the first portion 1320.

In some embodiments, in the object search mode, when a selection input applied to another object is detected or an input applied to the execution screen of the first application is received, the processor 840 may recognize the input as a search-end command and terminate the object search mode.

In the former case, another application (hereinafter, referred to as 'third application') corresponding to the another object may be executed. Accordingly, an execution screen of the third application as well as the first sub-area may be displayed in the second sub-area. The latter case may correspond to the case where the object search mode is terminated without selecting another object, and screen switching to (a) of Fig. 13 may be performed.

In some embodiments, FIG. 13 illustrates an example in which the object search mode is performed in a state where the first sub-area corresponding to the execution screen of the first application is displayed, but the screen switching from (a) to (b) of FIG. 13 may be performed even when the object search mode is performed while the first and second sub-areas are displayed simultaneously.

In this way, in the disclosure, even while an execution screen of an application is displayed in the card view area, a search for an object associated with another application may be performed immediately without terminating the execution of the application. Additionally, immediate switching to another application selected through the object search may be performed or an application which has not been terminated yet after execution may immediately be viewed continuously. This may exclude a repetitive execution of steps, for example, termination of execution, search, and execution.

### [Further expansion of App screen to full screen in card view area]

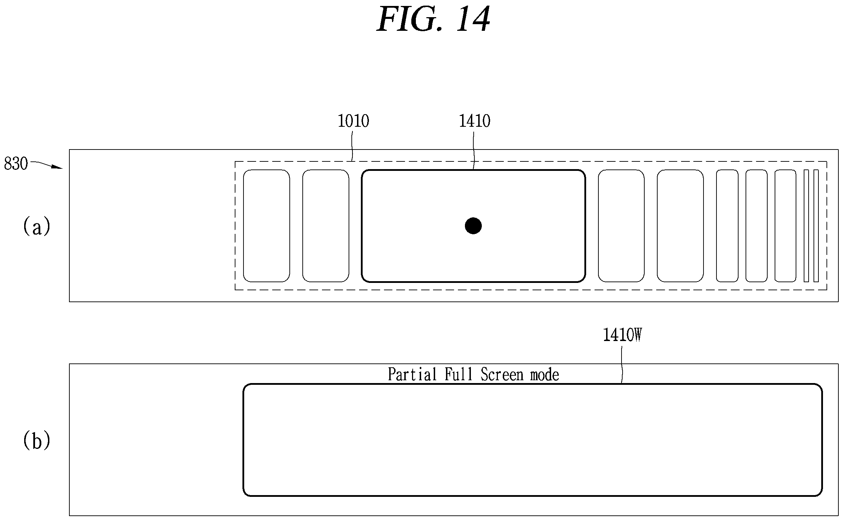

FIG. 14 is an exemplary conceptual view for explaining a method of additionally expanding an expanded execution screen of an application in the card view area 1010, according to an embodiment. In other examples, this is an embodiment related to expanding the first sub-area or second sub-area mentioned above to the entire area of the card view area 1010.

As illustrated in (a) of FIG. 14, in a state where an execution screen 1410 of a first application is displayed in the card view area 1010 of the display 830, the processor 840 may further expand the execution screen 1410 of the first application to the entire area of the card view area 1010, in response to receiving a preset touch input, for example, a long touch input. Accordingly, the occupant and the like may be able to watch movies and the like on a larger screen while staying in the vehicle.

In some embodiments, execution screens of first and second applications may be displayed simultaneously in the card view area 1010. In this instance, an execution screen of an unselected application may be implemented to be hidden in the background or automatically terminated to save a memory.

In some embodiments, in case of receiving a selection input to one of the first or second portion corresponding to execution screens of a plurality of applications in the card view area, the processor 840 may control the display such that a sub-area corresponding to a selected portion is displayed by being expanded to the entire card view area, and an execution of an application corresponding to an unselected portion is terminated or executed in the background.

In this instance, the processor 840 may display guide information on the display 830 to determine whether to terminate the execution of the application.

In this way, when a full-screen view mode is terminated while an execution screen of an application is expanded to the entire card view area 1010, the processor 840 may perform switching to the screen of (a) of FIG. 14. For example, the processor 840 may return the execution screen of the first application to be displayed in the original first sub-area.

### [Always direct screen switching]

In some embodiments, to improve usability of user interaction for the card view area, this specification may implement a method of directly accessing some applications regardless of a current screen (display) step.

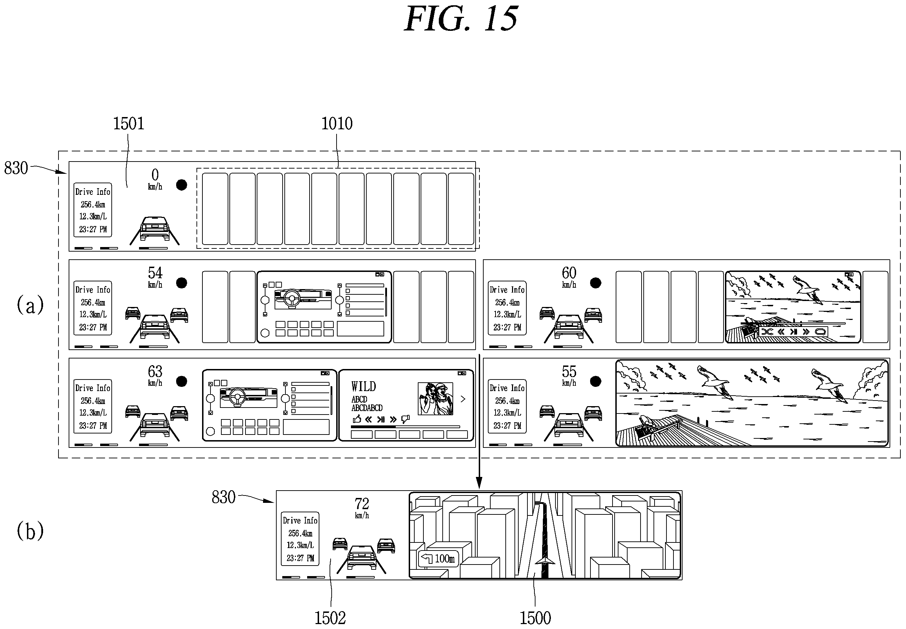

FIG. 15 is a view for explaining a method of directly switching to a route guidance screen of a vehicle, regardless of a current screen display stage of the card view image 1010.

The vehicle display device 800 according to the disclosure may be implemented to always display a navigation screen for a route guidance in the car view area 1010 by considering that the vehicle display device 800 is installed on the front seat of the vehicle 100 whose main purpose is movement.

In some embodiments, as illustrated in (a) of FIG. 15, while the card view area 1010 is displayed to be overlaid on a first screen 1501 of the display 830, the processor 840 may detect that a first input is received on the display 830, for example, a preset input is received on a portion, other than the card view area 1001, on the first screen 1501.

In response to the first input, the processor 840 may display a second screen 1500 including navigation information on the display 830, instead of the card view area 1010. In this instance, a display status of the card view area 1010 or a display status of the first screen 1501 may not matter.

For example, as in the various exemplary screens illustrated in (a) of FIG. 15, in any stage of the card view area 1010 among an initial screen, displaying of the first sub-area, simultaneous displaying of the first and second sub-areas, a full screen mode, and a screen lock mode, a second screen 1500 including navigation information may be displayed (open), as illustrated in (b) of FIG. 15, in response to the first input.

In this instance, although not shown, a first screen 1502 displayed together with the second screen 1500 may include one or more graphic objects associated with an execution/display stage of the previous card view area 1010. In this instance, the stage may return to a screen display stage before the second screen 1500 is output, in response to an input being applied to a corresponding graphic object.

In an embodiment, the processor 840 may control (limit) an operation of displaying an always-navigation screen to be performed when a set condition is satisfied, in response to detection of the first input. For example, the processor 840 may restrict a navigation screen from being displayed as a replacement for the card view area 1010 when the vehicle is in a parked state, and allow the aforementioned operations to be performed when the vehicle is traveling.

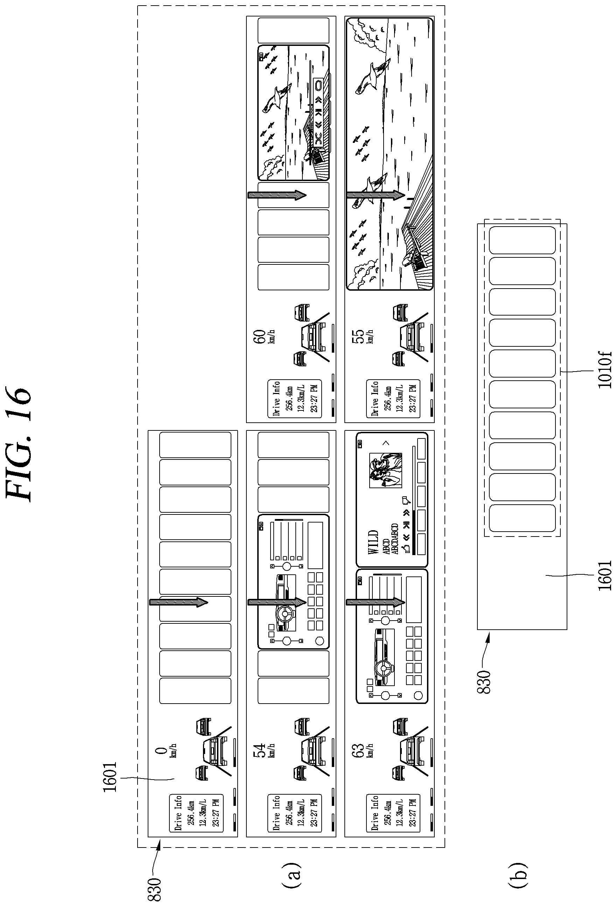

FIG. 16 is a view of a method of entering a card view area including favorite applications, regardless of a current screen (display) step of the card view area 1010.

In this specification, card view objects respectively corresponding to a plurality of applications included in the card view area 1010 may be installed by default or set through registration.

The occupant and the like may call up a card view area including favorite applications (including desired execution steps) by setting specific steps of frequently used applications, regardless of the current screen of the display 830.

To this end, while a first screen 1601 including the vehicle driving information is displayed on the display 830, when a second input is received on the display, for example, a sliding touch input is applied to an upper end of the display 830, as illustrated in (a) of FIG. 16, the processor 840 may reconfigure (reconstruct or reorganize) a card view area to include only objects corresponding to favorite applications, and provide the reconfigured card view area to the display 830.

Referring to (b) of FIG. 16, a card view area (hereinafter, referred to as 'second card view area') 1010f reconfigured with only the objects corresponding to the favorites applications may include indication (e.g., a distinct background color, indication of object-based favorites with ('stars'), and the like), which is distinguished from an original card view area 1010 (hereinafter, referred to as 'first card view area').

According to an embodiment, the registration of objects to be included in the second card view area may be performed through object-based designation while the first card view area is displayed.

For example, while the first card view area is displayed, objects of applications to be included in the second card view area may be designated by applying touch inputs to specific portions of respective card view objects (e.g., a specific portion/graphic object on an upper end of each card view object) corresponding to applications to be registered as favorites. In this instance, when a continuous touch input is applied to a specific portion of an individual card view object, the favorite registration may be released and the corresponding object may be excluded from the objects to be included in the second card view area. That is, the favorite registration may be canceled.

In some embodiments, as illustrated in (b) of FIG. 16, when an input is applied to the display 830 in an opposite direction to the second input while the second card view area 1010f is displayed on the display 830, the processor 840 may control the screen to return to the previous screen step instead of the second card view area 1010f.

Hereinafter, examples of adaptively varying card view objects included in a card view area, taking into account the vehicle's conditions, will be described. To ensure safe driving of the vehicle, when an execution screen of an application displayed on the display 830 interferes with safe driving, it may be desirable to restrict the execution screen from being displayed at least while the vehicle is traveling.

However, in case where the occupant and the like in the vehicle include a passenger in addition to a driver, the restriction with respect to the display may be released when the passenger other than the driver desires to use the vehicle display device 800, for example, when the passenger is sitting in a passenger seat where the vehicle display device 800 is installed.

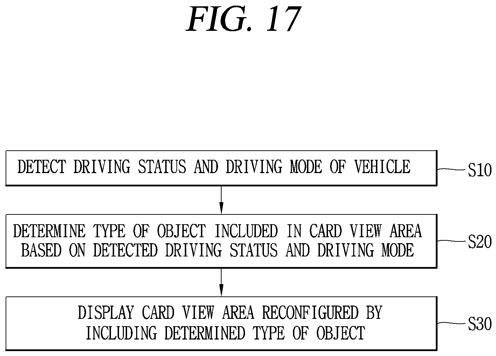

In this regard, FIG. 17 is a flowchart of a method of reconfiguring and displaying objects included in a card view area, according to an embodiment. Each step in the flowchart may be performed by the processor 840 of the vehicle display device 800 or the processor of the vehicle 100 unless otherwise specified.

Referring to FIG. 17, the vehicle display device 800 according to the disclosure may detect driving status and driving mode of the vehicle through communication with the vehicle (S10).

In some embodiments, the vehicle display device 800 may receive information related to whether the vehicle is traveling or is in a stopped or parked state, and whether a driving mode of the vehicle is an autonomous driving mode when the vehicle is traveling, from the vehicle 100 through the communication module 810. In an embodiment, the communication module 810 of the vehicle display device 800 may receive information about whether there is a passenger and the location of the passenger from various sensors (e.g., seat location detection sensor or the like) arranged in the vehicle 100.

Next, the type of object to be included in a card view area overlaid on a first screen may be determined based on the received driving status and driving mode (S20).

In some embodiments, in an embodiment, the processor 840 may reconfigure the card view area to further include at least one object associated with an execution of an application, which is allowed in the stopped state of the vehicle and restricted in the traveling state of the vehicle.

In an embodiment, the processor 840 may recognize the driving mode of the vehicle and construct the card view area to exclude at least one object, which is restricted in the traveling state of the vehicle, in case where the driving mode of the vehicle is a manual driving mode. On the other hand, the processor 840 may construct the card view area to include the same object as that when the vehicle is in the stopped state, in case where the driving mode of the vehicle is the autonomous driving mode.

For example, an object corresponding to a YouTube application, which was not included in the card view area 1010 while the vehicle is traveling, may be reconfigured to be included in the card view area 1010 after parking is completed.

Continuously, the card view area reconfigured to include the determined type of object may be displayed to be overlaid on the first screen (S30).

To this end, the processor 840 may control the display 830 to change the type of object included in the card view area 1010 based on at least one of the driving status and driving mode of the vehicle. In an embodiment, the processor 840 may additionally determine whether there is a need to limit objects to be included in the card view area 1010 based on information about the passenger of the vehicle, and reflect a result of the determination to the reconfiguration of the card view area 1010.

According to an embodiment, when at least one of the driving status and driving mode of the vehicle changes before displaying the card view area including the determined type of object, the reconfiguration of the objects included in the card view area may be updated based on the changed vehicle status.

As such, the specification may differently configure (organize) accessible applications depending on the status of the vehicle, such as a driving mode or whether the vehicle is in a parked or stopped state, thereby satisfying both safe driving and provision of various entertainment.

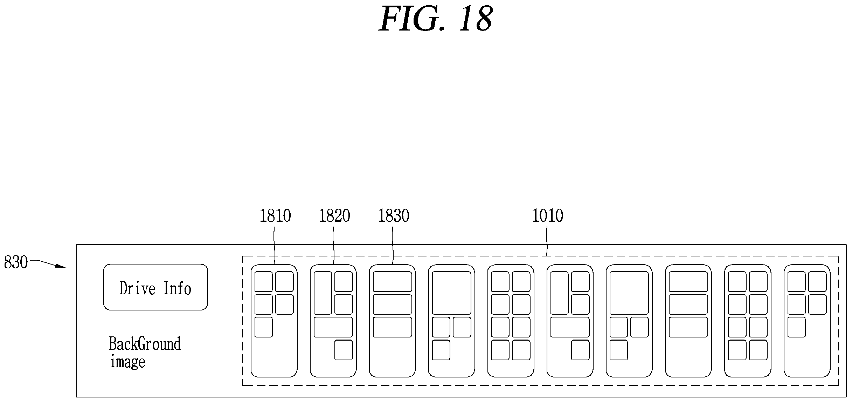

FIG. 18 is an exemplary conceptual view for explaining a method of providing a plurality of applications by grouping the plurality of applications in each object of a card view area, according to an embodiment.

The previous drawings show that each of a plurality of objects included in the card view area 1010 is in the form of one card view, but FIG. 18 illustrates a graphic object 1810, 1820, 1830, ..., in which a plurality of sub-objects associated with a plurality of applications are grouped into one group in one object. In this instance, access to more applications may be enabled in the card view area 1010.

The size and location of the sub-objects included in the grouped graphic object 1810, 1820, 1830, ... may be applied differently depending on the frequency of use or importance of the corresponding applications. For example, a sub-object corresponding to a more frequently used application may be displayed to be larger in size and located more upward.

In this way, at least one of a first object and a second object included in the card view area 1010 of the display 830 may include icons ('sub-objects') of a plurality of applications. In this instance, the aforementioned selection input for the object may be replaced with an input for an icon or specific sub-object of a specific application included in the first object or the second object.

In an embodiment, a specific sub-object belong to the grouped graphic object 1810, 1820, 1830, ... may be moved to a group corresponding to another card view object through a drag input.

For example, in FIG. 18, when a gesture input is received to move a first sub-object included in a first graphic object 1810 into a third graphic object 1830, the processor 840 may change a group such that the first sub-object is included in a group corresponding to the third graphic object 1830, and control the display 830 to display the first sub-object in the third graphic object 1830 instead of the first graphic object 1810.

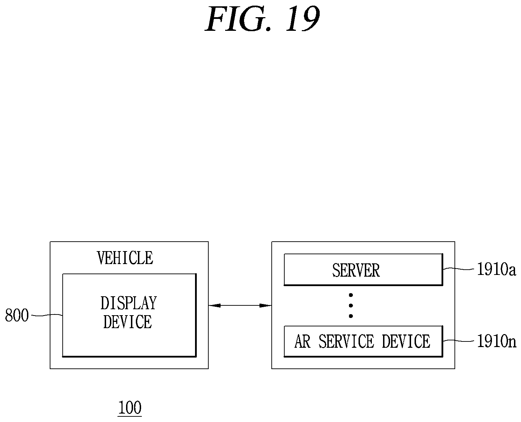

FIG. 19 is a view of a state in which a vehicle display device according to an embodiment communicates with an external server or another device.

The vehicle display device 800 according to the disclosure may be mounted on the vehicle 100 and control indication on the display 830 by receiving information related to the status of the vehicle from various sensors arranged in the vehicle, such as an ADAS view, a camera, a seat location detection sensor, and the like. In addition, the vehicle display device 800 may control the indication on the display 830 by communicating with an external device, such as an external server 1910a or an AR service device 1910n, through the communication module 810 or the vehicle 100. Accordingly, the vehicle display device 800 may update information previously stored in the memory 820 based on received information, and display more detailed information through the card view area 1010 of the display 830.

As described above, according to some embodiments of the disclosure, execution screens of a plurality of applications may be simultaneously checked and used inside the vehicle through a display device, which is mounted on a front seat of a vehicle and has a larger screen. In some embodiments, a plurality of expanded App screens may be displayed side by side in a card view area through only a simple interaction on the display device, allowing the plurality of applications to be used simultaneously without screen switching and App control. While using an execution screen of a single application or execution screens of a plurality of applications, search for and access to another application may be fast performed. In some embodiments, usability may further be improved by implementing direct access to a pre-designated application or a route guidance screen of the vehicle regardless of a current step. Accessible applications may be differently configured depending on the status of the vehicle, such as a driving mode or whether the vehicle is in a parked or stopped state, thereby satisfying both safe driving and provision of various entertainment. For example, when the vehicle is stopped or parked, a card view area may be reconfigured such that applications, which have not been provided in a traveling state for safe driving, are accessible. In case where the vehicle is capable of being driven in an autonomous driving mode, the card view area may be reconfigured to prioritize safety in a manual driving mode and to allow access to some applications, which do not interfere with driving, in the autonomous driving mode.

The present disclosure can be implemented as computer-readable codes (applications or software) in a program-recorded medium. The control method of the autonomous vehicle described above can be implemented using codes stored in memory, etc.

The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). Also, the computer may include a processor or a controller.

## Claims

1. A vehicle display device comprising:
a body mounted on a vehicle;
a memory configured to store navigation information related to the vehicle;
a display configured to display a first screen comprising driving information related to the vehicle and display a card view area on the first screen, the card view area comprising a plurality of objects associated with an execution of a plurality of applications; and
a processor configured to display an execution screen of a first application corresponding to a first object, the first object included in the card view area, on a first portion of the card view area, in response to receiving a selection input applied to the first object,
wherein the processor controls the display to output an execution screen of a second application corresponding to a second object, the second object included in the card view area, on a second portion adjacent to the first portion of the card view area, in response to receiving a selection input applied to the second object, and
the first and second portions are sub-areas having expanded sizes than corresponding objects, and remaining objects of the card view area are restricted from being displayed while the sub-areas are displayed.

2. The vehicle display device of claim 1, wherein the first screen is a panoramic image comprising the navigation information, and
the card view area is displayed to be overlaid on an area designated on the panorama image.

3. The vehicle display device of claim 1, wherein the first portion is an area expanded based on a display position of the first object inside the card view area.

4. The vehicle display device of claim 1, wherein the second portion is an area expanded based on a display position of the second object with respect to the execution screen of the first application, and
the position of the first part changes in response to a generation of the second portion.

5. The vehicle display device of claim 1, wherein the processor controls the display such that the third object obscured by the first portion is displayed, in response to receiving an input to the card view area for an object search, while the execution screen of the first application is displayed on the first portion, and is hidden again by the first portion after completion of the object search.

6. The vehicle display device of claim 5, wherein the processor controls the display such that a size of the first portion is reduced by an original size of the first object with maintaining the execution of the first application while receiving the input for the object search, and the first portion returns to a size before the object search when the object search is terminated.

7. The vehicle display device of claim 1, wherein the processor expands a sub-area corresponding to a selected portion to the entire card view area, and terminates an execution of an application corresponding to another portion which is not selected, in response to receiving a selection input to one of the first portion or the second portion.

8. The vehicle display device of claim 1, wherein the processor displays a second screen, instead of the card view area, on the display, the second screen comprising the navigation information, in response to receiving a first input to the display while the first screen is displayed.

9. The vehicle display device of claim 1, wherein the processor controls the display such that the card view area is reconfigured with objects corresponding to favorite applications, in response to receiving a second input to the display while the first screen is displayed.

10. The vehicle display device of claim 1, wherein the processor controls the display such that a type of object comprised in the card view area changes based on at least one of a driving status or driving mode of the vehicle.

11. The vehicle display device of claim 10, wherein the processor, in a stopped state of the vehicle, reconfigures the card view area by further comprising an object associated with an execution of at least one application, which is restricted while the vehicle travels.

12. The vehicle display device of claim 10, wherein the processor recognizes the driving mode of the vehicle,
configures the card view area by excluding at least one object, which is restricted while the vehicle travels, and displays the configured card view area, in a manual driving mode, and
configures the card view area by comprising a same object as that while the vehicle is in a stopped state and displays the configured card view area, in an autonomous driving mode.

13. The vehicle display device of claim 1, wherein the processor controls the display such that the first screen is maintained and simultaneously the card view area is drawn out along an input to be displayed, in response to receiving the input to a first area of the display while only the first screen is displayed on the display.

14. The vehicle display device of claim 1, wherein at least one of the first object or the second object included in the card view area comprises icons of a plurality of applications, and the selection input is applied to an icon of a specific application comprised in the first object or the second object.

15. The vehicle display device of claim 1, wherein the processor, in case where a specific object in the card view area is associated with the driving information, controls the display such that the driving information is restricted from being displayed on the first screen, and the specific object comprising the driving information is displayed on a designated position in the card view area when the card view are is displayed.

16. A vehicle comprising a vehicle display device,
wherein the vehicle display device comprises:
a display configured to display a first screen comprising driving information related to the vehicle and display a card view area on the first screen, the card view area comprising objects associated with an execution of a plurality of applications; and
a processor configured to display an execution screen of a first application corresponding to a first object, the first object included in the card view area, on a first portion of the card view area, in response to receiving a selection input applied to the first object,
wherein the processor controls the display to output an execution screen of a second application corresponding to a second object, the second object included in the card view area, on a second portion adjacent to the first portion of the card view area, in response to receiving a selection input applied to the second object while the execution screen of the first application is displayed, and
the first and second portions are sub-areas having expanded sizes than corresponding objects, and remaining objects of the card view area are restricted from being displayed while the sub-areas are displayed.
